# FASCICULE DE BREVET EUROPEEN

(11) **EP 2 140 121 B1**
(45) Date de publication et mention de la délivrance du brevet: **16.03.2011**
(21) Numéro de dépôt: 08787948.2
(22) Date de dépôt: 14.04.2008
(51) Int. Cl.: F02C 7/06, F02C 7/26, F02C 7/275

(54) **PROCEDE ET SYSTEME POUR LE DEMARRAGE D'UN TURBOMOTEUR PAR TEMPS FROID**
VERFAHREN UND SYSTEM ZUM STARTEN EINES TURBOMOTORS DURCH KALTE WITTERUNG
METHOD AND SYSTEM FOR STARTING A TURBOSHAFT ENGINE BY COLD WEATHER

(30) Priorité: 23.04.2007 FR 0702921
(43) Date de publication de la demande: 06.01.2010
(73) Titulaire: AIRBUS OPERATIONS, 31060 Toulouse (FR)
(72) Inventeur: BULIN, Guillaume, 31700 Blagnac (FR); JACQUET FRANCILLON, Pierre, 31330 Grenade (FR)
(74) Mandataire: Hauer, Bernard
(86) Numéro de dépôt international: PCT/FR2008/000514
(87) Numéro de publication internationale: WO 2008/142287

(56) Documents cités:
- GB-A- 2 260 577
- US-A- 4 741 152

## Description

La présente invention concerne un procédé pour le démarrage d'un turbomoteur par temps froid et un turbomoteur, notamment pour aéronef, mettant en oeuvre ce procédé.

On sait que, pour démarrer un turbomoteur, on utilise un démarreur délivrant un couple moteur sur l'arbre dudit turbomoteur. Un tel couple moteur a pour objet de surmonter l'ensemble des couples résistifs imposés sur ledit arbre et résultant principalement de la traînée aérodynamique des parties mises en rotation, de la friction mécanique des pièces en contact et des pertes par frottement visqueux entre les pièces en contact baignant dans le fluide d'au moins un circuit hydraulique de lubrification et/ou de régulation thermique associé audit turbomoteur. Le démarreur accélère progressivement le turbomoteur et, lorsqu'une vitesse de rotation prédéfinie est atteinte, on initie l'injection et l'allumage du combustible dans la chambre de combustion du turbomoteur. Puis, à une autre vitesse de rotation prédéfinie, l'action du démarreur est arrêtée et le turbomoteur continue d'accélérer jusqu'à sa vitesse de ralenti grâce à la combustion dudit combustible.

Les démarreurs connus peuvent être de type pneumatique (turbine alimentée en air comprimé), mais, de plus en plus, ils sont de type électrique. Dans ce dernier cas, il s'agit généralement de machines synchrones fonctionnant en moteur pendant la phase de démarrage du turbomoteur et en générateur pendant les phases de vol de l'aéronef. Dans ce qui suit, on ne considère que des démarreurs de type électrique.

On comprendra aisément que, par temps froid (par exemple lorsque la température ambiante et la température du fluide du circuit hydraulique associé au turbomoteur est inférieure à -20°C), ledit fluide fige, ce qui augmente fortement le couple résistif que doit vaincre le démarreur électrique pour démarrer ledit turbomoteur. Bien entendu, le démarreur électrique doit être apte à effectuer de tels démarrages par temps froid, de sorte que sa puissance est prévue à cet effet. Toutefois on remarquera que les démarrages par temps froid sont des événements relativement rares dans la vie d'un aronef, de sorte qu'on est amené à utiliser soit des démarreurs surpuissants et donc lourds, dans la plupart des séquences de démarrage, soit des procédures de réchauffement du circuit hydraulique du turbomoteur par utilisation de source de chaleur externe.

L'inconvénient de masse et de puissance excessives pour un démarreur électrique d'aéronef est encore augmenté du fait que, pour des raisons d'architecture électrique au niveau des systèmes avion, on prévoit deux démarreurs électriques par turbomoteur. Ainsi, ledit turbomoteur peut être démarré, même si l'un des démarreurs électriques est défaillant.

Par ailleurs, il est à noter que le couple résistif visqueux développé par un turbomoteur durant un démarrage par temps froid est difficile à prédire avec exactitude. Il dépend de la température exacte du fluide du turbomoteur à l'instant du démarrage, de la qualité et des propriétés de ce fluide, de la déformation relative liée à la température ambiante des pièces mécaniques en contact, ainsi qu'à d'autres paramètres difficilement pré-dictibles. C'est pourquoi le dimensionnement du démarreur est effectué à partir de courbes de couples résistifs intégrant une marge de calcul. Néanmoins, cette précaution ne garantit pas que la puissance du démarreur couvre tous les cas de démarrage par temps froid susceptibles d'être rencontrés par l'aéronef. L'utilisateur doit donc prendre en conséquence des procédures spécifiques avant une tentative de démarrage par temps froid, procédures qui se révèlent pénalisantes en terme de mises en oeuvre et de disponibilité de l'aéronef et qui ne peuvent éviter que des tentatives de démarrage de turbomoteurs échouent.

Pour remédier à ces inconvénients, le document GB-A-2 260 577 décrit un procédé pour la mise en marche d'un turbomoteur à l'aide d'un démarreur électrique, ledit turbomoteur étant pourvu d'au moins un circuit de fluide hydraulique pour la lubrification d'au moins certaines pièces dudit turbomoteur, procédé selon lequel, lors du démarrage dudit turbomoteur par temps froid, on transfère au fluide hydraulique du circuit de lubrification du turbomoteur au moins une partie de l'énergie calorifique engendrée par ledit démarreur électrique.

Ainsi, le fluide hydraulique (huile) du circuit de lubrification du turbomoteur est réchauffé par ledit démarreur électrique au moment d'un démarrage par temps froid, de sorte que la viscosité dudit fluide hydraulique est réduite, ce qui diminue le couple résistant engendré par ce dernier. Il en résulte que les temps de démarrage, le dimensionnement des démarreurs et les risques d'avortement de démarrage sont également réduits.

La présente invention a pour objet de perfectionner le procédé connu décrit ci-dessus dans le cas où le circuit de lubrification du turbomoteur est pourvu de moyens de régulation de température aptes à évacuer la chaleur émise par ledit turbomoteur lorsqu'il fonctionne. Dans ce cas, selon l'invention, afin d'accélérer le réchauffement du fluide hydraulique du circuit de lubrification dudit turbomoteur, on inhibe lesdits moyens de régulation de température du circuit de lubrification du turbomoteur pendant le transfert d'énergie calorifique du démarreur électrique au fluide hydraulique du circuit de lubrification du turbomoteur.

Bien que le procédé conforme à la présente invention puisse être mis en oeuvre à des températures relativement peu basses, en pratique le transfert d'énergie calorifique du démarreur électrique au fluide hydraulique du circuit de lubrification du turbomoteur est effectué lorsque la température de ce dernier est au moins approximativement inférieure à -20°C.

Lorsque, de façon usuelle, le démarreur est pourvu d'au moins un circuit de fluide hydraulique pour la lubrification d'au moins certaines pièces dudit démarreur, il est avantageux d'effectuer le transfert d'énergie calorifique du démarreur au fluide hydraulique du circuit de lubrification du turbomoteur par l'intermédiaire dudit circuit de lubrification du démarreur.

Si, de plus, ledit circuit de lubrification du démarreur est pourvu de moyens de régulation de température aptes à évacuer la chaleur émise par ledit démarreur lorsqu'il fonctionne, il est préférable, en ce qui concerne la vitesse de réchauffement du fluide hydraulique du circuit de lubrification du turbomoteur, que l'on inhibe lesdits moyens de régulation de température du circuit de lubrification du démarreur pendant le transfert d'énergie calorifique du démarreur électrique au fluide hydraulique du circuit de lubrification du turbomoteur.

Le transfert d'énergie calorifique du démarreur au fluide hydraulique du circuit de lubrification du turbomoteur peut être poursuivi jusqu'au démarrage dudit turbomoteur ou bien jusqu'à ce que la température de ce fluide hydraulique atteigne une première valeur prédéterminée correspondant à une viscosité normale de ce dernier. Dans le cas où ledit transfert d'énergie calorifique est prévu pour être poursuivi jusqu'au démarrage, il est avantageux de prévoir une sécurité apte à interrompre ledit transfert d'énergie calorifique avant ledit démarrage, si la température du fluide hydraulique du circuit de lubrification du turbomoteur atteint une seconde valeur prédéterminée risquant d'endommager ce dernier.

La présente invention concerne également un système pour la mise en marche d'un turbomoteur à l'aide d'un démarreur électrique, ledit turbomoteur et ledit démarreur comportant chacun un circuit hydraulique de lubrification pourvu de moyens de régulation de température par évacuation thermique. Conformément à la présente invention, afin de pouvoir faciliter les démarrages dudit turbomoteur par temps froid, ledit système est remarquable en ce qu'il comporte :
- des moyens commandables pour le transfert unidirectionnel d'énergie calorifique entre le circuit hydraulique de lubrification du démarreur et le circuit hydraulique de lubrification du turbomoteur ; et
- des moyens d'inhibition commandables des moyens de régulation de température des circuits hydrauliques de lubrification du turbomoteur et du démarreur.

Dans une variante de réalisation du système conforme à la présente invention, dans lequel une partie desdits moyens de régulation de température du circuit hydraulique de lubrification du turbomoteur est efficace lorsque ledit aéronef repose sur le sol, il est avantageux que :
- ledit circuit hydraulique de lubrification du démarreur ne comporte pas en propre des moyens de régulation de température efficaces lorsque l'aéronef repose sur le sol; et
- lesdits moyens commandables de transfert unidirectionnel d'énergie calorifique assurent la liaison entre ledit circuit hydraulique de lubrification du démarreur et ladite partie des moyens de régulation de température du circuit hydraulique du turbomoteur afin que ladite partie assure la régulation thermique dudit circuit hydraulique de lubrification du démarreur, lorsque l'aéronef repose sur le sol.

Les figures du dessin annexé feront bien comprendre comment l'invention peut être réalisée. Sur ces figures, des références identiques désignent des éléments semblables.

La figure 1 est un schéma illustrant un exemple de système connu pour un turbomoteur et son démarreur électrique, ainsi que pour leurs circuits hydrauliques.

La figure 2 illustre, en vue semblable à la figure 1, un premier mode de mise en oeuvre de la présente invention pour le perfectionnement du système connu de ladite figure 1.

La figure 3 illustre un second mode de mise en oeuvre de la présente invention pour le perfectionnement du système connu de la figure 1.

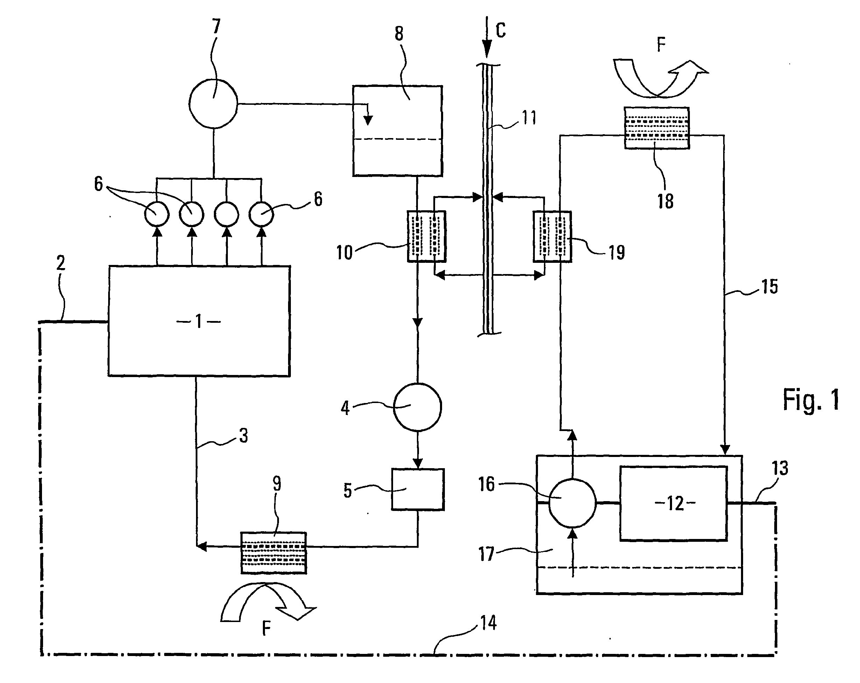

Sur la figure 1, on a représenté schématiquement, par un rectangle, un turbomoteur à double flux 1 pour un aéronef (non représenté). Le turbomoteur est pourvu d'un arbre 2 et il est parcouru par un fluide hydraulique circulant dans au moins un circuit hydraulique 3.

Le circuit 3 de type connu, représenté à titre d'exemple sur la figure 1, comporte une pompe de pressurisation 4, un filtre 5, des pompes de retour 6, un dé-aérateur 7 et un réservoir de fluide hydraulique (huile) 8.

Le circuit 3 est destiné à lubrifier au moins certaines parties du turbomoteur 1 et à assurer une température de fonctionnement appropriée à ce dernier. Ainsi, ledit circuit 3 comporte au moins un dispositif apte à refroidir le fluide hydraulique et à le réguler en température. Dans l'exemple représenté, on a prévu à cet effet :
- un échangeur de chaleur air/fluide hydraulique 9, apte à dissiper de l'énergie calorifique dudit fluide hydraulique dans un flux d'air F traversant le turbomoteur 1 (flux froid de la soufflante) ou environnant ledit turbomoteur. Un tel échangeur peut être du type à plaques ou à tubes, ou bien encore être surfacique et être disposé sur les parois de la nacelle du turbomoteur. Bien entendu, l'échangeur de chaleur 9, bien que pouvant présenter une certaine efficacité lorsque l'aéronef repose au sol, est principalement efficace lorsque ledit aéronef est en mouvement ; et
- un échangeur de chaleur combustible/fluide hydraulique 10, apte à dissiper de l'énergie calorifique dudit fluide hydraulique dans un flux de combustible C qui circule dans une canalisation 11. L'échangeur de chaleur 10 peut être efficace lorsque l'aéronef repose sur le sol, du fait que la température du combustible est généralement inférieure à celle dudit fluide hydraulique.

Par ailleurs, sur la figure 1, on a représenté, également schématiquement par un rectangle, une machine électrique du type démarreur/générateur 12, dont l'arbre 13 peut être accouplé à l'arbre 2 du turbomoteur 1 par un accouplement 14 (représenté par une ligne en trait mixte) afin de démarrer ledit turbomoteur. De façon analogue à ce qui a été décrit ci-dessus, la machine électrique 12 est lubrifiée et régulée en température par un fluide hydraulique circulant dans au moins un circuit hydraulique 15.

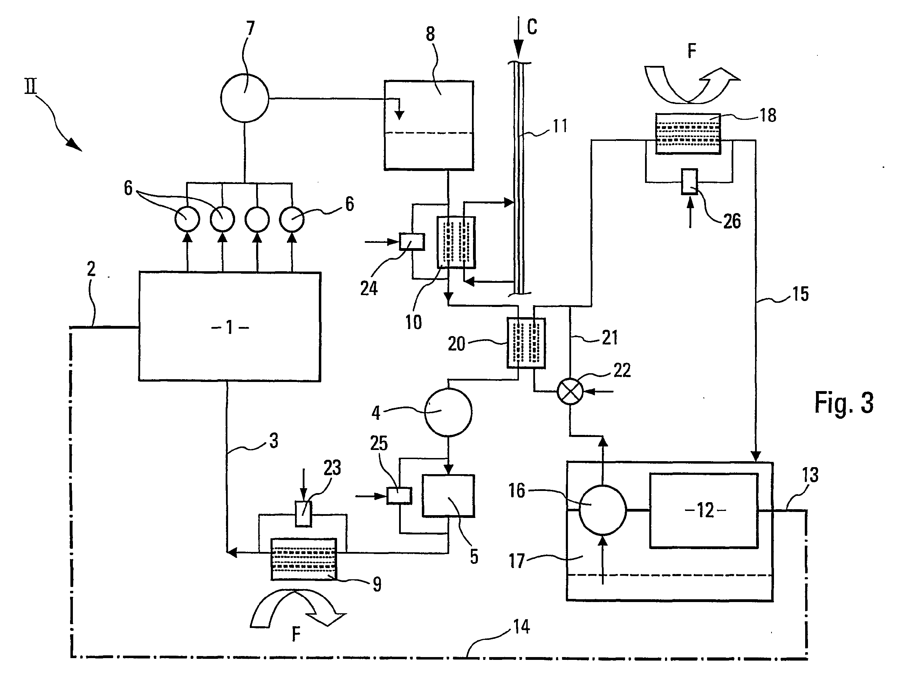

Le circuit 15 de type connu, représenté à titre d'exemple sur la figure 3, comporte une pompe de pressurisation 16, un réservoir de fluide hydraulique 17, un échangeur de chaleur air/fluide hydraulique 18 (semblable à l'échangeur 9 décrit ci-dessus) et un échangeur de chaleur combustible/fluide hydraulique 19 (semblable à l'échangeur 10 mentionné ci-dessus).

On comprendra aisément que, en fonctionnement, le turbomoteur 1 et la machine électrique 12 peuvent être lubrifiés et régulés en température, respectivement par les circuits 3 et 15.

L'objet de la présente invention est de perfectionner le système connu de la figure 1, d'une part, pour améliorer le démarrage du turbomoteur 1 par la machine électrique 12, lorsque, par temps froid, la température du fluide hydraulique du circuit 3 est très basse, notamment inférieure à -20°C, et, d'autre part, pour évacuer l'énergie calorifique dissipée par la machine électrique 12 au sol.

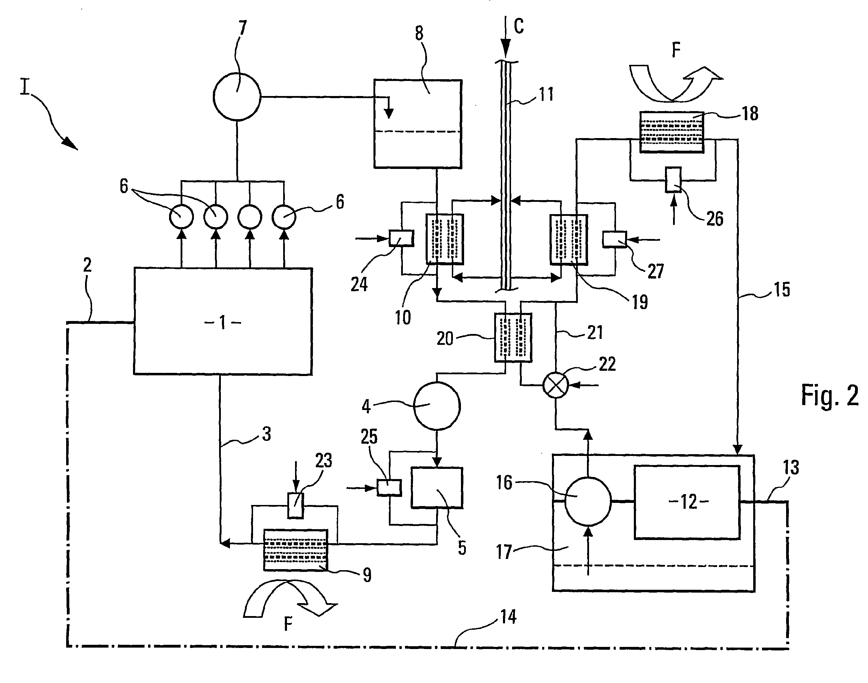

Sur la figure 2, on a représenté un premier exemple de système I conforme à la présente invention et perfectionnant le système de la figure 1. Sur cette figure 2, on retrouve tous les éléments 1 à 19, F et C décrits ci-dessus.

De plus, le système I comporte:
- un échangeur de chaleur 20 disposé entre les circuits hydrauliques 3 et 15 et pouvant être inhibé, du côté du circuit 15, par un by-pass 21 sous la dépendance d'une vanne commandable 22 ;
- des by-pass commandables 23, 24, 25, respectivement montés en parallèle sur les échangeurs de chaleur 9 et 10 et sur le filtre 5, pour pouvoir inhiber l'action de ces éléments du circuit hydraulique 3 ; et
- des by-pass commandables 26 et 27, respectivement montés en parallèle sur les échangeurs de chaleur 18 et 19 pour pouvoir inhiber l'action de ces échangeurs du circuit hydraulique 15.

Lors d'un démarrage du turbomoteur 1 par le démarreur 12 dans des conditions de température normales, le by-pass 21 est passant sous l'action de la vanne commandable 22, de sorte qu'il n'existe aucune liaison thermique entre les circuits hydrauliques 3 et 15 par l'intermédiaire de l'échangeur 20. De plus, les by-pass 23 à 27 sont bloquants, de sorte que les éléments 9, 10, 5, 18 et 19 ne sont pas inhibés. Du point de vue échange thermique, le système I de la figure 2 se trouve donc alors dans le même état que le système connu de la figure 1.

En revanche, lors d'un démarrage du turbomoteur 1 par le démarreur 12 par temps froid, la vanne 22 est commandée pour inhiber le by-pass 21 et faire passer le fluide hydraulique du circuit 15 dans l'échangeur 20. Le fluide hydraulique du circuit 3 est donc réchauffé par celui du circuit 15, c'est-à-dire par l'énergie calorifique dissipée par le démarreur 12, ce qui, comme mentionné ci-dessus, favorise ou même rend possible le démarrage du turbomoteur 1. Un tel réchauffement du fluide hydraulique du circuit 3 est favorisé et accéléré, du fait que les éléments 5, 9, 10, 18 et 19 sont alors court-circuités par les by-pass 23 à 27 correspondants, commandés pour être passants.

Cet état de démarrage par temps froid, avec le by-pass 21 bloquant et les by-pass 23 à 27 passants, peut être maintenu jusqu'à ce que la température du fluide hydraulique du circuit 3 atteigne une valeur prédéterminée ou bien jusqu'à ce que le moteur 1 démarre.

Dans ce dernier cas, si la température du fluide du circuit hydraulique atteignait une température risquant d'endommager ledit turbomoteur, on interromprait le transfert de chaleur en rendant passant le by-pass 21 par la commande de la vanne 22. De plus, on commanderait au blocage le by-pass 24, et éventuellement le by-pass 23, afin d'actionner l'échangeur de chaleur 10, 9 correspondant. On pourrait de plus activer de la même façon l'échangeur de chaleur 19, et éventuellement l'échangeur de chaleur 18.

Dans la variante de réalisation de l'invention illustrée par le système II de la figure 3, on retrouve tous les éléments du système I de la figure 2, à l'exception de l'échangeur de chaleur 19 (surtout efficace au repos au sol) et de son by-pass 27. Dans le système II, l'ensemble de l'échangeur de chaleur 20, du by-pass 21 et de la vanne 22 non seulement exerce la fonction de réchauffement du fluide du circuit hydraulique 3 lors des démarrages par temps froid telle qu'expliquée ci-dessus, mais encore permet à l'échangeur de chaleur 10 (et éventuellement à l'échangeur 9) du circuit 3 du turbomoteur 1 de remplir la fonction de l'échangeur de chaleur 19 pendant des démarrages lors de conditions de température normales.

En effet, dans le système II de la figure 3, dès que le démarreur 12 est actionné et quelles que soient les conditions de température, la vanne 22 bloque le by-pass 21, de sorte que de l'énergie calorifique est transmise du circuit hydraulique 15 au circuit hydraulique 3. Tant que la température du fluide du circuit hydraulique 3 est inférieure à une valeur prédéterminée, le by-pass 24 de l'échangeur 10 (et éventuellement le by-pass 23 de l'échangeur 9) reste passant, inhibant ledit échangeur 10 (9). En revanche, dès que la température atteint cette valeur prédéterminée, le by-pass 24 (23) devient bloquant et l'échangeur 10 (9) évacue de la chaleur dans le combustible C.

Bien que dans les exemples ci-dessus les moyens de transfert unidirectionnel d'énergie calorifique entre les circuits hydrauliques 15 et 3 aient été décrits sous la forme de l'échangeur de chaleur 20 associé au by-pass 21 et à la vanne commandable 22, il va de soi que ces moyens pourraient être remplacés par un autre type d'échangeur, tel que par exemple des caloducs à thermosiphon, ce qui permettrait de supprimer ladite vanne commandable. De plus, ces moyens de transfert unidirectionnels peuvent être multiples, afin d'assurer la redondance du système en cas de panne, et ils peuvent être avantageusement disposés dans le réservoir 8 afin d'être plus efficaces.

## Revendications

1. Procédé pour la mise en marche d'un turbomoteur (1) d'aéronef à l'aide d'un démarreur électrique (12), ledit turbomoteur étant pourvu d'au moins un circuit de fluide hydraulique (3) pour la lubrification d'au moins certaines pièces dudit turbomoteur (1), procédé selon lequel, lors du démarrage dudit turbomoteur (1) par temps froid, on transfère au fluide hydraulique dudit circuit de lubrification (3) du turbomoteur (1) au moins une partie de l'énergie calorifique engendrée par ledit démarreur électrique (12),
**caractérisé en ce que**, ledit circuit de lubrification (3) du turbomoteur (1) étant pourvu de moyens de régulation de température (9, 10) aptes à évacuer la chaleur émise par ledit turbomoteur (1) lorsqu'il fonctionne, on inhibe lesdits moyens de régulation de température (9, 10) pendant le transfert d'énergie calorifique du démarreur électrique (12) au fluide hydraulique du circuit de lubrification(3) du turbomoteur (1).

2. Procédé selon la revendication 1,
**caractérisé en ce que** le transfert d'énergie calorifique du démarreur électrique (12) au fluide hydraulique dudit circuit de lubrification (3) du turbomoteur (1) est effectué lorsque la température de ce dernier est au moins approximativement inférieure à -20°C.

3. Procédé selon l'une des revendications 1 ou 2, mis en oeuvre avec un démarreur (12) pourvu d'au moins un circuit de fluide hydraulique (15) pour la lubrification d'au moins certaines pièces dudit démarreur (12), **caractérisé en ce que** le transfert d'énergie calorifique du démarreur (12) au fluide hydraulique du circuit de lubrification (3) du turbomoteur (1) s'effectue par l'intermédiaire dudit circuit de lubrification (15) du démarreur (12).

4. Procédé selon la revendication 3, mis en oeuvre avec un démarreur (12) dont le circuit de lubrification (15) est pourvu de moyens de régulation de température (18, 19) aptes à évacuer la chaleur émise par ledit démarreur (12) lorsqu'il fonctionne,
**caractérisé en ce que** l'on inhibe lesdits moyens de régulation de température (18, 19) du circuit de lubrification (15) du démarreur (12) pendant le transfert d'énergie calorifique du démarreur électrique (12) au fluide hydraulique du circuit de lubrification (3) du turbomoteur (1).

5. Procédé selon l'une des revendications 1 à 4,
**caractérisé en ce que** le transfert d'énergie calorifique du démarreur (12) au fluide hydraulique dudit circuit de lubrification (3) du turbomoteur (1) est poursuivi jusqu'à ce que la température du fluide hydraulique dudit circuit de lubrification (3) atteigne une première valeur prédéterminée correspondant à une viscosité normale de ce dernier.

6. Procédé selon l'une des revendications 1 à 4,
**caractérisé en ce que** le transfert d'énergie calorifique du démarreur (12) au fluide hydraulique du circuit de lubrification (3) du turbomoteur (1) est poursuivi jusqu'au démarrage dudit turbomoteur (1).

7. Procédé selon la revendication 6,
**caractérisé en ce que** le transfert d'énergie calorifique du démarreur (12) au fluide hydraulique du circuit de lubrification (3) du turbomoteur (1) est interrompu, avant le démarrage dudit turbomoteur, si la température de ce fluide hydraulique atteint une seconde valeur prédéterminée risquant d'endommager ledit turbomoteur (1).

8. Système pour la mise en marche d'un turbomoteur (1) à l'aide d'un démarreur électrique (12), ledit turbomoteur (1) et ledit démarreur (12) comportant chacun un circuit hydraulique de lubrification (3, 15) pourvu de moyens de régulation de température (8, 9 ; 18, 19) par évacuation thermique,
**caractérisé en ce qu'**il comporte:
- des moyens commandables (20, 21, 22) pour le transfert unidirectionnel d'énergie calorifique entre le circuit hydraulique de lubrification (15) du démarreur (12) et le circuit hydraulique de lubrification (3) du turbomoteur (1); et
- des moyens d'inhibition commandables (23, 24 ; 26, 27) des moyens de régulation de température (8, 9 ; 18, 19) des circuits hydrauliques de lubrification (3, 15) du turbomoteur (1) et du démarreur (12).

9. Système selon la revendication 8, dans lequel une partie (10) desdits moyens de régulation de température du circuit hydraulique de lubrification (3) du turbomoteur (1) est efficace lorsque ledit aéronef repose sur le sol,
**caractérisé en ce que**:
- ledit circuit hydraulique de lubrification (15) du démarreur (12) ne comporte pas en propre des moyens de régulation de température efficaces lorsque l'aéronef repose sur le sol ; et
- lesdits moyens commandables (20, 21, 22) de transfert unidirectionnel d'énergie calorifique assurent la liaison entre ledit circuit hydraulique de lubrification(15) du démarreur (12) et ladite partie (10) des moyens de régulation de température du circuit hydraulique (3) du turbomoteur (1) afin que ladite partie (10) assure la régulation thermique dudit circuit hydraulique de lubrification (15) du démarreur (12) lorsque l'aéronef repose sur le sol.

## Claims

1. A method for starting up an aircraft turbine engine (1) using an electric starter (12), said turbine engine being provided with at least one hydraulic fluid circuit (3) for lubricating at least certain parts of said turbine engine (1), in which method, when said turbine engine (1) is being started in cold weather, at least some of the heat energy generated by said electric starter (12) is transferred to the hydraulic fluid of said turbine engine (1) lubricating circuit (3),
**characterized in that** with said turbine engine (1) lubricating circuit (3) being provided with temperature-regulating means (9, 10) able to remove the heat emitted by said turbine engine (1) when it is running, said temperature-regulating means (9, 10) are inhibited while heat energy is being transferred from the electric starter (12) to the hydraulic fluid of the turbine engine (1) lubricating circuit (3).

2. The method as claimed in claim 1,
**characterized in that** heat energy is transferred from the electric starter (12) to the hydraulic fluid of said turbine engine (1) lubricating circuit (3) when the temperature therein is at least approximately below -20°C.

3. The method as claimed in one of claims 1 or 2, implemented using a starter (12) provided with at least one hydraulic fluid circuit (15) for lubricating at least certain parts of said starter (12), **characterized in that** heat energy is transferred from the starter (12) to the hydraulic fluid of the turbine engine (1) lubricating circuit (3) via said starter (12) lubricating circuit (15).

4. The method as claimed in claim 3, implemented using a starter (12) the lubricating circuit (15) of which is provided with temperature-regulating means (18, 19) able to remove the heat emitted by said starter (12) when it is operating,
**characterized in that** said temperature-regulating means (18, 19) of the starter (12) lubricating circuit (15) are inhibited while heat energy is being transferred from the electric starter (12) to the hydraulic fluid of the turbine engine (1) lubricating circuit (3).

5. The method as claimed in one of claims 1 to 4,
**characterized in that** the transfer of heat energy from the starter (12) to the hydraulic fluid of said turbine engine (1) lubricating circuit (3) is continued until the temperature of the hydraulic fluid of said lubricating circuit (3) reaches a first preset value corresponding to a normal viscosity of said fluid.

6. The method as claimed in one of claims 1 to 4,
**characterized in that** the transfer of heat energy from the starter (12) to the hydraulic fluid of the turbine engine (1) lubricating circuit (3) is continued until said turbine engine (1) starts.

7. The method as claimed in claim 6,
**characterized in that** the transfer of heat energy from the starter (12) to the hydraulic fluid of the turbine engine (1) lubricating circuit (3) is interrupted before said turbine engine starts, if the temperature of this hydraulic fluid reaches a second preset value that carries the risk of damaging said turbine engine (1).

8. A system for starting up a turbine engine (1) using an electric starter (12), said turbine engine (1) and said starter (12) each comprising a hydraulic lubricating circuit (3, 15) provided with heat-removal temperature-regulating means (8, 9; 18, 19), **characterized in that** it comprises:
- controllable means (20, 21, 22) for the one-way transfer of heat energy between the starter (12) hydraulic lubricating circuit (15) and the turbine engine (1) lubricating hydraulic circuit (3); and
- controllable means (23, 24; 26, 27) of inhibiting the temperature-regulating means (8, 9; 18, 19) of the turbine engine (1) and starter (12) lubricating hydraulic circuits (3, 15).

9. The system as claimed in claim 8, in which a part (10) of said turbine engine (1) lubricating hydraulic circuit (3) temperature-regulating means is operational when said aircraft is resting on the ground, **characterized in that**:
- said starter (12) lubricating hydraulic circuit (15) does not per se comprise temperature-regulating means that are operational when the aircraft is resting on the ground; and
- said controllable means (20, 21, 22) for the one-way transfer of heat energy provide a connection between said starter (12) lubricating hydraulic circuit (15) and said part (10) of the turbine engine (1) hydraulic circuit (3) temperature-regulating means so that said part (10) provides temperature regulation for said starter (12) lubricating hydraulic circuit (15) when the aircraft is resting on the ground.

## Patentansprüche

1. Verfahren zum Anfahren eines Luftfahrzeug-Turbomotors (1) anhand eines elektrischen Anlassers (12), wobei der Turbomotor mit mindestens einem Hydraulikfluidkreis (3) für die Schmierung mindestens bestimmter Teile des Turbomotors (1) versehen ist, wobei nach dem Verfahren beim Anlassen des Turbomotors (1) bei kaltem Wetter dem Hydraulikfluid des Schmiermittelkreises (3) des Turbomotors (1) mindestens ein Teil der Wärmeenergie, die von dem elektrischen Anlasser (12) erzeugt wird, übertragen wird,
**dadurch gekennzeichnet, dass**, während der Schmiermittelkreis (3) des Turbomotors (1) mit Temperaturregelungsmitteln (9, 10) versehen ist, die dazu geeignet sind, die Wärme abzuführen, die von dem Turbomotor (1) abgegeben wird, wenn er funktioniert, die Temperaturregelungsmittel (9, 10) während des Wärmeenergietransfers von dem elektrischen Anlasser (12) auf das Hydraulikfluid des Schmiermittelkreis (3) des Turbomotors (1) gesperrt werden.

2. Verfahren nach Anspruch 1, **dadurch gekennzeichnet, dass** der Wärmeenergietransfer von dem elektrischen Anlasser (12) auf das Hydraulikfluid des Schmiermittelkreises (3) des Turbomotors (1) erfolgt, wenn die Temperatur desselben mindestens annähernd niedriger ist als -20 °C.

3. Verfahren nach einem der Ansprüche 1 oder 2, eingesetzt mit einem Anlasser (12), der mit mindestens einem Hydraulikfluidkreis (15) versehen ist für die Schmierung mindestens bestimmter Teile des Anlassers (12), **dadurch gekennzeichnet, dass** der Wärmeenergietransfer von dem Anlasser (12) auf das Hydraulikfluid des Schmiermittelkreises (3) des Turbomotors (1) über den Schmiermittelkreis (15) des Anlassers (12) erfolgt.

4. Verfahren nach Anspruch 3, eingesetzt mit einem Anlasser (12), dessen Schmiermittelkreis (15) mit Temperaturregelungsmitteln (18, 19) versehen ist, die dazu geeignet sind, die Wärme abzuführen, die von dem Anlasser (12) abgegeben wird, wenn er funktioniert,
**dadurch gekennzeichnet, dass** die Temperaturregelungsmittel (18, 19) des Schmiermittelkreises (15) des Anlassers (12) während des Wärmeenergietransfers von dem elektrischen Anlasser (12) auf das Hydraulikfluid des Schmiermittelkreises (3) des Turbomotors (1) gesperrt werden.

5. Verfahren nach einem der Ansprüche 1 bis 4, **dadurch gekennzeichnet, dass** der Wärmeenergietransfer von dem Anlasser (12) auf das Hydraulikfluid des Schmiermittelkreises (3) des Turbomotors (1) fortfährt, bis die Temperatur des Hydraulikfluids des Schmiermittelkreises (3) einen ersten vorherbestimmten Wert erreicht, der einer normalen Viskosität desselben entspricht.

6. Verfahren nach einem der Ansprüche 1 bis 4, **dadurch gekennzeichnet, dass** der Wärmeenergietransfer von dem Anlasser (12) auf das Hydraulikfluid des Schmiermittelkreises (3) des Turbomotors (1) bis zum Anlassen des Turbomotors (1) fortfährt.

7. Verfahren nach Anspruch 6, **dadurch gekennzeichnet, dass** der Wärmeenergietransfer von dem Anlasser (12) auf das Hydraulikfluid des Schmiermittelkreises (3) des Turbomotors (1) vor dem Anlassen des Turbomotors unterbrochen wird, wenn die Temperatur dieses Hydraulikfluids einen zweiten vorherbestimmten Wert erreicht, der den Turbomotor (1) beschädigen könnte.

8. System zum Anfahren eines Turbomotors (1) anhand eines elektrischen Anlassers (12), wobei der Turbomotor (1) und der Anlasser (12) jeweils einen Schmiermittel-Hydraulikkreis (3, 15) umfassen, der mit Temperaturregelungsmitteln (8, 9; 18, 19) durch Wärmeabführung versehen ist,
**dadurch gekennzeichnet, dass** es Folgendes umfasst:
- steuerbare Mittel (20, 21, 22) für den einseitigen Transfer von Wärmeenergie zwischen dem Schmiermittelhydraulikkreis (15) des Anlassers (12) und dem Schmiermittelhydraulikkreis (3) des Turbomotors (1); und
- steuerbare Sperrmittel (23, 24; 26, 27) der Temperaturregelungsmittel (8, 9; 18, 19) der Schmiermittelhydraulikkreise (3, 15) des Turbomotors (1) und des Anlassers (12).

9. System nach Anspruch 8, wobei ein Teil (10) der Temperaturregelungsmittel des Schmiermittelhydraulikkreises (3) des Turbomotors (1) wirksam ist, wenn sich das Luftfahrzeug am Boden befindet,
**dadurch gekennzeichnet, dass**:
- der Schmiermittelhydraulikkreis (15) des Anlassers (12) als solcher keine wirksamen Temperaturregelungsmittel umfasst, wenn sich das Luftfahrzeug am Boden befindet; und
- die steuerbaren Mittel (20, 21, 22) zum einseitigen Wärmeenergietransfer die Verbindung zwischen dem Schmiermittelhydraulikkreis (15) des Anlassers (12) und dem Teil (10) der Temperaturregelungsmittel des Hydraulikkreises (3) des Turbomotors (1) sicherstellen, damit der Teil (10) die Wärmeregelung des Schmiermittelhydraulikkreises (15) des Anlassers (12) sicherstellt, wenn sich das Luftfahrzeug am Boden befindet.
